(19) Europäisches Patentamt
European Patent Office
Office européen des brevets

(11) **EP 4 296 955 B1**

(12) **EUROPEAN PATENT SPECIFICATION**

(45) Date of publication and mention
of the grant of the patent:
**03.06.2026 Bulletin 2026/23**

(21) Application number: **23158684.3**

(22) Date of filing: **27.02.2023**

(51) International Patent Classification (IPC):
*G06T 11/00* (2026.01)     *G06T 7/73* (2017.01)

(52) Cooperative Patent Classification (CPC):
**G06T 7/73; G06T 11/00;** G06T 2207/10016;
G06T 2207/30252

(54) **DEVICE AND METHOD WITH VEHICLE BLIND SPOT VISUALIZATION**

VORRICHTUNG UND VERFAHREN MIT FAHRZEUGTOTWINKELVISUALISIERUNG

DISPOSITIF ET PROCÉDÉ DE VISUALISATION D'ANGLE MORT DE VÉHICULE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **20.06.2022 KR 20220075072**

(43) Date of publication of application:
**27.12.2023 Bulletin 2023/52**

(73) Proprietor: **Samsung Electronics Co., Ltd.**
**Suwon-si, Gyeonggi-do 16677 (KR)**

(72) Inventors:
 • **PARK, Daeul**
  **Suwon-si, 16678 (KR)**
 • **SUNG, Kapje**
  **Suwon-si, 16678 (KR)**
 • **LEE, Dongwook**
  **Suwon-si, 16678 (KR)**
 • **LEE, Jaewoo**
  **Suwon-si, 16678 (KR)**

(74) Representative: **Arnold & Siedsma**
**Bezuidenhoutseweg 57**
**2594 AC The Hague (NL)**

(56) References cited:
**GB-A- 2 571 923**

 • **GAKNE PAUL ET AL: "Tightly-Coupled GNSS/
Vision Using a Sky-Pointing Camera for Vehicle
Navigation in Urban Areas", SENSORS, vol. 18,
no. 4, 17 April 2018 (2018-04-17), pages 1244,
XP055965492, DOI: 10.3390/s18041244**
 • **YU SHANG-LIN ET AL: "Comparison of odometry
techniques for vehicle navigation", 2016
INTERNATIONAL AUTOMATIC CONTROL
CONFERENCE (CACS), IEEE, 9 November 2016
(2016-11-09), pages 19 - 24, XP033119048, DOI:
10.1109/CACS.2016.7973877**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

BACKGROUND

1. Field

The following description relates to a device and method with vehicle blind spot visualization.

2. Description of Related Art

A surround view monitor (SVM) may be a parking safety system configured to provide an image in the form of the surroundings of a vehicle viewed from above. For example, the SVM may provide images input from a total of four cameras-one for the front, one for each of the left and right sides, and one for the rear of a vehicle-as an image in a top-down view mode and an image in a multi-view mode, in the form of a bird's eye view of the surroundings of a vehicle based on time change and image synthesis. GB 2 571 923 A describes a method for correcting for changes in orientation of a vehicle, the method comprising: obtaining a first image including a first region external to the vehicle and first orientation information indicative of the orientation of the vehicle at a first time corresponding to when the first image is captured; obtaining second orientation information indicative of the orientation of the vehicle at a second time later than the first time; determining a change in vehicle orientation between the first and second times using the first orientation information and the second orientation information; generating a modified first image using the first image and the determined change in vehicle orientation, the modified first image being representative of the first region from the perspective of the vehicle at the second time; and rendering at least part of the modified first image. The scientific article by Ganke Paul et al. "Tightly-Coupled GNSS/Vision Using a Sky-Pointing Camera for Vehicle Navigation in Urban Areas", Sensors, vol. 18, no. 4, page 1244, 2018 presents a method of fusing the ego-motion of a robot or a land vehicle estimated from an upward-facing camera with Global Navigation Satellite System (GNSS) signals for navigation purposes in urban environments. A sky-pointing camera is mounted on the top of a car and synchronized with a GNSS receiver. The GNSS and visual information systems are tightly-coupled in a Kalman filter for the final position solution.

However, in a typical SVM, an image of a part (under the bonnet or body of the vehicle, for example) that is hidden by the body of the vehicle may not be captured by the cameras, and in the presence of an obstacle around this part, a driver of the vehicle may not be readily secure their view and may have difficulty in parking or driving.

SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

In one general aspect of the present invention, an electronic device includes the features of claim 1.

In another general aspect of the present invention, a processor-implemented method of an electronic device includes the features of claim 7.

In another general aspect of the present invention, one or more embodiments include a non-transitory computer-readable storage medium storing instructions that, when executed by one or more processors, configure the one or more processors to perform any one, any combination, or all operations and 20 methods described herein.

Further aspects of the present invention are provided by the dependent claims.

Other features and aspects will be apparent from the following detailed description, the drawings, and the claims.

BRIEF DESCRIPTION OF THE DRAWINGS

FIG. 1 illustrates an example of an electronic device.
FIG. 2 illustrates an example of a blind spot in a surround view monitor (SVM) image.
FIG. 3 illustrates an example of three-dimensional (3D) movement information of a vehicle.
FIG. 4 illustrates a flowchart of an operating method of an electronic device.
FIG. 5 illustrates an example of an operation of determining an essential matrix.
FIG. 6 illustrates an example of an operation of visualizing a blind spot of a vehicle.
FIG. 7 illustrates an example of visualization of a blind spot to which a movement of a vehicle is applied.

Throughout the drawings and the detailed description, unless otherwise described or provided, the same drawing reference numerals will be understood to refer to the same elements, features, and structures. The drawings may not be to scale, and the relative size, proportions, and depiction of elements in the drawings may be exaggerated for clarity, illustration, and convenience.

DETAILED DESCRIPTION

The following detailed description is provided to assist the reader in gaining a comprehensive understanding of the methods, apparatuses, and/or systems described herein. However, various changes, modifications, and equivalents of the methods, apparatuses, and/or systems described herein will be apparent after an understanding of the disclosure of this application. For example, the sequences of operations described herein are merely examples, and are not limited to those set forth herein, but may be changed as will be apparent after an understanding of the disclosure of this application, with the exception of operations necessarily occurring in a certain order. Also, descriptions of features that are known after understanding of the disclosure of this application may be omitted for increased clarity and conciseness.

The features described herein may be embodied in different forms and are not to be construed as being limited to the examples described herein. Rather, the examples described herein have been provided merely to illustrate some of the many possible ways of implementing the methods, apparatuses, and/or systems described herein that will be apparent after an understanding of the disclosure of this application.

As used herein, "A or B," "at least one of A and B," "at least one of A or B," "A, B, or C," "at least one of A, B, and C," and "A, B, or C," each of which may include any one of the items listed together in the corresponding one of the phrases, or all possible combinations thereof. Although terms of "first," "second," and "third" may be used to describe various components, members, regions, layers, or sections, these components, members, regions, layers, or sections are not to be limited by these terms (e.g., "first," "second," and "third"). Rather, these terms are only used to distinguish one component, member, region, layer, or section from another component, member, region, layer, or section. Thus, for example, a "first" component, member, region, layer, or section referred to in examples described herein may also be referred to as a "second" component, member, region, layer, or section, and a "second" component, member, region, layer, or section referred to in examples described herein may also be referred to as the "first" component without departing from the teachings of the examples.

Throughout the specification, when an element, such as a layer, region, or substrate, is described as being "on," "connected to," or "coupled to" another element, it may be directly "on," "connected to," or "coupled to" the other element, or there may be one or more other elements intervening therebetween. In contrast, when an element is described as being "directly on," "directly connected to," or "directly coupled to" another element, there may be no other elements intervening therebetween. Likewise, similar expressions, for example, "between" and "immediately between," and "adjacent to" and "immediately adjacent to," are also to be construed in the same.

The terminology used herein is for describing various examples only and is not to be used to limit the disclosure. The articles "a," "an," and "the" are intended to include the plural forms as well, unless the context clearly indicates otherwise. The terms "comprises," "includes," and "has" specify the presence of stated features, numbers, operations, members, elements, and/or combinations thereof, but do not preclude the presence or addition of one or more other features, numbers, operations, members, elements, and/or combinations thereof. As used herein, the term "and/or" includes any one and any combination of any two or more of the associated listed items. The use of the term "may" herein with respect to an example or embodiment (for example, as to what an example or embodiment may include or implement) means that one or more examples or embodiments exists where such a feature is included or implemented, while all examples are not limited thereto

Unless otherwise defined, all terms, including technical and scientific terms, used herein have the same meaning as commonly understood by one of ordinary skill in the art to which this disclosure pertains and based on an understanding of the disclosure of the present application. Terms, such as those defined in commonly used dictionaries, are to be interpreted as having a meaning that is consistent with their meaning in the context of the relevant art and the disclosure of the present application and are not to be interpreted in an idealized or overly formal sense unless expressly so defined herein.

Also, in the description of example embodiments, detailed description of structures or functions that are thereby known after an understanding of the disclosure of the present application will be omitted when it is deemed that such description will cause ambiguous interpretation of the example embodiments. Hereinafter, examples will be described in detail with reference to the accompanying drawings, and like reference numerals in the drawings refer to like elements throughout.

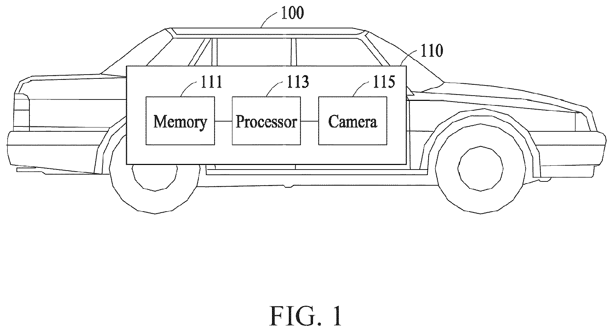

FIG. 1 illustrates an example of an electronic device.

Referring to FIG. 1, a vehicle 100 may be or include all types of means of transportation traveling on a road or track. The vehicle 100 may be or include, for example, an automobile, a motorcycle, and/or the like, and the automobile may be or include various types such as a passenger car, a freight vehicle, and/or a two-wheeled vehicle. The vehicle 100 may be or include an autonomous vehicle, an intelligent vehicle, and/or a vehicle equipped with a driving assistance system. The vehicle 100 used herein may be a vehicle with an electronic device 110 provided therein, but examples of which are not limited thereto.

The electronic device 110 may include a memory 111 (e.g., one or more memories), a processor 113 (e.g., one or more processors), and a camera 115 (e.g., one or more cameras).

The memory 111 may include computer-readable instructions. The processor 113 may perform operations to be described hereinafter as the instructions stored in the memory 111 are executed by the processor 113. The memory 111 may be a volatile or nonvolatile memory. The memory 111 may be or include a non-transitory computer-readable storage medium storing instructions that, when executed by the processor 113, configure the processor 113 to perform any one, any combination, or all of the operations and methods described herein with references to FIGS. 1 to 7. The processor 113 may execute the instructions to perform any one, any combination, or all of the operations and methods described herein with references to FIGS. 1 to 7.

The processor 113, which is a device configured to execute instructions or programs or control the electronic device 110, may be or include, for example, a central processing unit (CPU) and/or a graphics processing unit (GPU), but examples of which are not limited to the foregoing example.

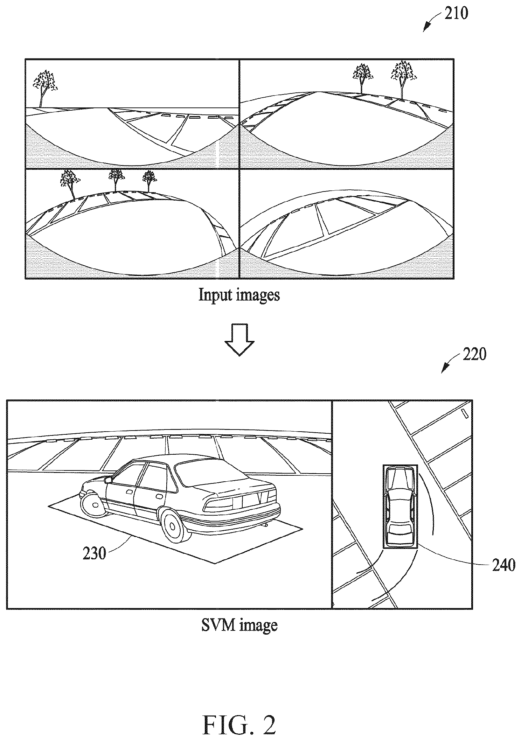

The processor 113 may render a top-view mode image that displays the surroundings of the vehicle 100 with the vehicle 100 being centered by performing image processing on an image captured by the camera 115 fixed to the vehicle 100. As will be described in detail below with reference to FIG. 2, there may be a blind spot that is not displayed in the rendered image depending on a position at which the camera 115 is fixed. The processor 113 may determine and visualize, within a rendered image (e.g., a surround view monitor (SVM) image), the blind spot according to a three-dimensional (3D) movement of the vehicle 100 and may thereby provide a naturally rendered image for the movement of the vehicle 100, and a user (e.g., a driver of the vehicle 100) may receive the naturally rendered image and use it as assistance for driving or parking the vehicle 100.

The camera 115 may include one or more cameras fixed to vehicle 100. For example, the camera 115 may include four cameras respectively arranged on the front, rear, left, and right sides of the vehicle 100. Depending on an arrangement structure of the camera 115, there may be a blind spot under the vehicle 100. An image captured by the camera 115 may be transmitted to the processor 113.

Although the camera 115 is illustrated as being included in the electronic device 110 in the example of FIG. 1, examples are not limited thereto. For another example, the description provided herein may apply even when the electronic device 110 processes an image received from a camera external to the electronic device 110. In addition, although the electronic device 110 is illustrated as being provided in the vehicle 100 in the example of FIG. 1, examples are not limited thereto. For another example, an image captured by the camera 115 provided in the vehicle 100 may be transmitted to the electronic device 110 provided outside the vehicle 100, and image processing may then be performed there. The electronic device 110 may be or include, for example, various computing devices (e.g., a mobile phone, a smartphone, a personal computer (PC), a tablet PC, an e-book device, a laptop, a desktop, a workstation, and/or a server), various wearable devices (e.g., a smartwatch, smart eyeglasses, a head-mounted display (HMD), and/or smart clothes), various home appliances (e.g., a smart speaker, a smart television (TV), and/or a smart refrigerator), and/or other devices such as a smart vehicle, a smart kiosk, an Internet of things (IoT) device, a walking assist device (WAD), a drone, a robot, and/or the like.

FIG. 2 illustrates an example of a blind spot in a surround view monitor (SVM) image.

Referring to FIG. 2, illustrated are captured images 210 and SVM images 220 generated by cameras fixed to a vehicle.

An SVM may refer to a system that provides a user with an image in the form of a top-down view of a vehicle viewed from above through image synthesis and camera calibration. The image synthesis may be a technique for removing distortion from a captured image, transforming the captured image into an image of a virtual view, and/or combining four images into one. The camera calibration may be a technique for performing calibration by analyzing optical characteristics of a camera to remove image distortion that may be caused by applying an ultra-wide-angle lens. Using these techniques, an SVM image (e.g., the SVM images 220) to be provided to a user may be determined based on captured images (e.g., the captured images 210).

In the example of FIG. 2, the captured images 210 are images captured by four cameras fixed to a vehicle, for example, images captured by fisheye cameras. For example, the captured images 210 may be captured by the four cameras respectively fixed to a grille in the front, side mirrors on both sides, and a trunk door of the vehicle. For example, the captured images 210 may include a first image captured by a camera fixed to the grille in the front of the vehicle, a second image captured by a camera fixed to a left side mirror of the vehicle, a third image captured by a camera fixed to a right side mirror of the vehicle, and a fourth image captured by a camera fixed to the trunk door of the vehicle. The SVM images 220 may include an image in a top-view mode of viewing the vehicle from above and an image in a bowl view mode of viewing the vehicle obliquely from above, generated by synthesizing the captured images 210. For example, as illustrated in FIG. 2, the SVM images 220 may include blind spots 230 and 240 that may not be captured by a camera due to a camera arrangement structure. The blind spots 230 and 240 may be portions corresponding to a portion under the vehicle. When a typical electronic device generates the SVM images 220 and an obstacle is present in the corresponding portion, it may be difficult for a user to check the obstacle with the SVM images 220. In contrast, an electronic device of one or more embodiments may visualize the blind spots 230 and 240 and provide the visualized blind spots 230 and 240 to the user.

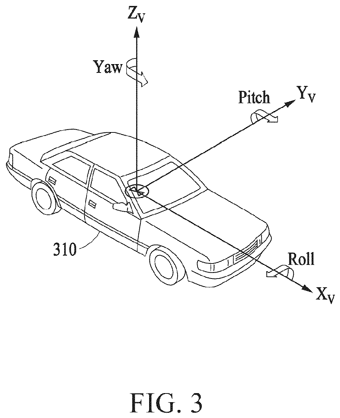

FIG. 3 illustrates an example of 3D movement information of a vehicle.

Referring to FIG. 3, a rotational movement of a vehicle 310 may be represented by a roll rotating about an x-axis, a pitch rotating about a y-axis, and a yaw rotating about a z-axis. For example, when the vehicle 310 crosses a speed bump or travels on a road with a varying gradient slope, the pitch may occur in the vehicle 310. Also, for example, when the road is inclined left or right in a direction perpendicular to a traveling direction of the vehicle 310, the roll may occur in the vehicle 310.

In addition, a movement of the vehicle 310 may be represented based on the x, y, and z axes. 3D movement information of the vehicle 310 may be represented by a $3 \times 3$ rotation matrix representing a 3D rotation of the vehicle 310 and a $3 \times 1$ translation matrix representing a 3D movement of the vehicle 310.

As will be described in detail below, by visualizing a blind spot included in an SVM image according to 3D movement information of a vehicle, the electronic device of one or more embodiments may provide a natural image for a 3D movement of the vehicle in various driving situations, thereby improving the user's driving convenience.

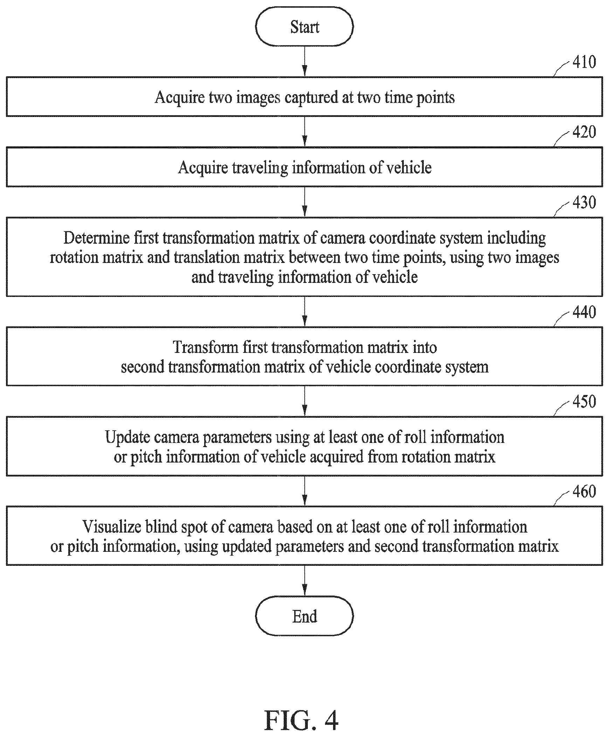

FIG. 4 illustrates a flowchart of an operating method of an electronic device.

Operations 410 through 460 to be described hereinafter may be performed in sequential order, but may not be necessarily performed in sequential order. For example, the operations 410 through 460 may be performed in different orders, and at least two of the operations 410 through 460 may be performed in parallel or simultaneously. The operations 410 through 460 to be described hereinafter with reference to FIG. 4 may be performed by one or more components (e.g., the memory 11, the processor 113, and/or the camera 115 of FIG. 1) of an electronic device (e.g., the electronic device 110 of FIG. 1) described herein, and in addition to the description of FIG. 4 below, the descriptions of FIGS. 1 through 3 are also applicable to FIG. 4.

In operation 410, the electronic device acquires two images captured at two different time points from a camera fixed to a vehicle that is traveling. For example, the electronic device may acquire an image captured at a previous time point t-1 and an image captured at a current time point t by the camera fixed to the vehicle, but examples are not limited thereto.

In operation 420, the electronic device acquires traveling information of the vehicle. For example, the traveling information may include wheel speed information included in a controller area network (CAN) signal of the vehicle, but is not limited to the foregoing example.

In operation 430, the electronic device determines a first transformation matrix of a camera coordinate system including a rotation matrix and a translation matrix between the two time points, using the two images and the traveling information of the vehicle. The camera coordinate system may refer to a coordinate system that is set with respect to a corresponding camera.

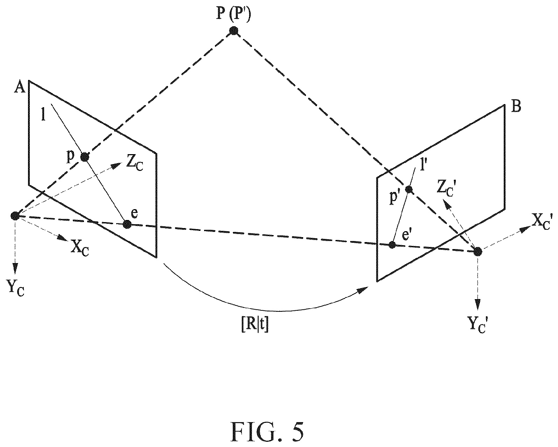

In an example, in operation 410, the electronic device captures images at two different time points while the vehicle is moving. For example, the electronic device may acquire images captured at a previous time point t-1 and a current time point t from a camera that captures a traveling direction of the vehicle (e.g., a camera fixed to the front in the case of the vehicle traveling forward). For example, as illustrated in FIG. 5, the image captured at the previous time point t-1 may correspond to an image A, and the image captured at the current time point t may correspond to an image B.

In this example, in operation 430, the electronic device may extract a plurality of features from the images A and B and determine a matching relationship among the extracted features. For example, as illustrated in FIG. 5, the electronic device may extract features p and p' from the images A and B and determine a matching relationship between the features p and p'. The extracted features may each correspond to a trackable point in each image and may correspond to, for example, an edge or a vertex. In the example of FIG. 5, a point P (or P') may be extracted as the features p and p' captured in the respective images. The matching relationship may indicate that the feature p in the image A and the feature p' in the image B match each other (e.g., correspond to the same P or P').

For example, an ORB (oriented features from accelerated segment test (FAST) and rotated binary robust independent elementary features (BRIEF)) algorithm may be used for extracting the features p and p', and a nearest neighbor distance ratio (NNDR) algorithm may be used to determine the matching relationship between the features p and p'. However, examples are not limited to the foregoing example, and various other techniques may be applied without limitation.

In this example, in operation 430, the electronic device may calculate an essential matrix after transforming the matching relationship into a normalized image coordinate system using camera parameters. In this case, distortion correction may be applied to an image, and an eight-point algorithm may be used for calculating the essential matrix. However, examples are not limited thereto. The normalized image coordinate system may be a coordinate system in which units of the coordinate system are removed through normalization, and may be, for example, a coordinate system defining a virtual image plane having the distance of 1 from a camera focus. Since the camera parameters change depending on a camera, the normalized image coordinate system in which an influence of the camera parameters is removed may be used to interpret information from an image. The essential matrix may be a matrix indicating a permanently established relationship between points on a homogeneous coordinate system in a normalized image plane of matching feature points in images captured at two arbitrary points, and may be, for example, a 3×3 matrix. However, examples are not limited thereto. In addition, Equation 1 below, for example, may be used to transform a pixel coordinate system into the normalized image coordinate system using the camera parameters.

Equation 1:

$$\begin{bmatrix} x \\ y \\ 1 \end{bmatrix} = \begin{bmatrix} f_x & 0 & c_x \\ 0 & f_y & c_y \\ 0 & 0 & 1 \end{bmatrix} \begin{bmatrix} u \\ v \\ 1 \end{bmatrix}$$

In Equation 1 above, (x, y) denotes coordinates in a two-dimensional (2D) image, $f_x$ and $f_y$ denote a focal length of a camera, $c_x$ and $c_y$ denote a main point of the camera, and (u, v) denotes coordinates in the normalized image coordinate system.

For example, the electronic device may determine a rotation matrix R and a translation matrix t for a movement of the vehicle between the previous time point t-1 and the current time point t by decomposing the essential matrix. The electronic device may determine a first transformation matrix of a camera coordinate system including the rotation matrix R and the translation matrix t. In this example, the rotation matrix R may be a 3×3 matrix, the translation matrix t may be a 3×1 matrix, and a singular value decomposition (SVD) algorithm may be used to determine the rotation matrix R and the translation matrix t from the essential matrix. However, examples are not limited thereto.

When determining the translation matrix t, the translation matrix t is scaled by a moving distance based on the traveling information. The traveling information may include, for example, wheel speed information included in a CAN signal of the vehicle. The moving distance may be determined based on the wheel speed information and a time difference between the previous time point t-1 and the current time point t.

In operation 440, the electronic device transforms the first transformation matrix into a second transformation matrix of a vehicle coordinate system. The vehicle coordinate system may be a coordinate system that is set with respect to the vehicle.

The electronic device transforms the first transformation matrix of the camera coordinate system into the second transformation matrix of the vehicle coordinate system, using Equation 2 below, for example.

Equation 2:

$$\mathrm{T}_{Car\,(t)\,to\,(t-1)} = \mathrm{T}_{Camera\,to\,Car} * \mathrm{T}_{Camera\,(t)\,to\,(t-1)} * \mathrm{T}_{Car\,to\,Camera}$$

In Equation 2 above, $T_{Camera\,to\,car}$, which denotes a matrix that transforms the camera coordinate system into the vehicle coordinate system, may be determined in an initial calibration operation performed when an SVM system of the vehicle is initially built. $T_{Camera\,(t)\,to\,(t-1)}$, which is the first transformation matrix determined in operation 430, may denote a transformation matrix from the previous time t-1 to the current time t in the camera coordinate system. $T_{Car\,to\,Camera}$, which denotes a matrix that transforms the vehicle coordinate system into the camera coordinate system, may correspond to an inverse transformation matrix of $T_{Camera\,to\,Car}$. $T_{Car\,(t)\,to\,(t-1)}$ denotes the second transformation matrix of the vehicle coordinate system. Here, T may denote a 3×4 matrix including a 3×3 rotation matrix and a 3×1 translation matrix, but is not limited thereto. For example, T may be represented as a 4×4 matrix in Equation 2 to facilitate inter-matrix calculation. For example, the 4×4 matrix may be determined by adding a (0, 0, 0, 1) matrix to the 3×4 matrix described above as a fourth row, and the 4×4 matrix implemented as described above may enable inter-T matrix multiplication.

As will be described in detail below, when the second transformation matrix $T_{Car\,(t)\,to\,(t-1)}$ is used, which region at the previous time point t-1 corresponds to a region corresponding to a blind spot at the current time t may be determined. Position information of the region corresponding to the blind spot at the current time t may be based on the vehicle coordinate system, and when the position information is multiplied by $T_{Car\,to\,Camera}$, the position information may be transformed into the camera coordinate system. In addition, when the position information of the camera coordinate system is multiplied by $T_{Camera\,(t)\,to\,(t-1)}$, the position information at the current time point t on the camera coordinate system may be transformed into position information of the previous time point t-1. Since a rendered image provided to a user corresponds to the vehicle coordinate system, the electronic device may transform the position information at the previous time point t-1 on the camera coordinate system into the vehicle coordinate system, which may be performed based on $T_{Camera\ to\ Car}$.

In operation 450, the electronic device updates the camera parameters to apply thereto a movement of the vehicle using either one or both of roll information and pitch information of the vehicle acquired from a rotation matrix.

For example, in operation 450, the electronic device may decompose the rotation matrix R determined in operation 430 into roll information, pitch information, and yaw information of the vehicle, using Equation 3 below, for example. In this example, the roll information, the pitch information, and the yaw information may represent a 3D movement of the vehicle occurring between the previous time point t-1 and the current time point t.

Equation 3:

$$R = R_z(\alpha)\, R_y(\beta)\, R_x(\gamma)$$

$$= \begin{bmatrix} \cos\alpha & -\sin\alpha & 0 \\ \sin\alpha & \cos\alpha & 0 \\ 0 & 0 & 1 \end{bmatrix} \overset{\text{pitch}}{\begin{bmatrix} \cos\beta & 0 & \sin\beta \\ 0 & 1 & 0 \\ -\sin\beta & 0 & \cos\beta \end{bmatrix}} \overset{\text{roll}}{\begin{bmatrix} 1 & 0 & 0 \\ 0 & \cos\gamma & -\sin\gamma \\ 0 & \sin\gamma & \cos\gamma \end{bmatrix}}$$

$$= \begin{bmatrix} \cos\alpha\cos\beta & \cos\alpha\sin\beta\sin\gamma - \sin\alpha\cos\gamma & \cos\alpha\sin\beta\cos\gamma + \sin\alpha\sin\gamma \\ \sin\alpha\cos\beta & \sin\alpha\sin\beta\sin\gamma + \cos\alpha\cos\gamma & \sin\alpha\sin\beta\cos\gamma - \cos\alpha\sin\gamma \\ -\sin\beta & \cos\beta\sin\gamma & \cos\beta\cos\gamma \end{bmatrix}$$

In Equation 3 above, $\alpha$ denotes the roll information, $\beta$ denotes the pitch information, and $\gamma$ denotes the yaw information.

The electronic device updates the camera parameters to apply a movement of the vehicle to the updated camera parameters, using either one or both of the roll information and the pitch information of the vehicle. For example, when pitch information of 3 degrees occurs between the previous time point t-1 and the current time point t while the vehicle is crossing a speed bump, the electronic device may add 3 degrees to pitch information of 2 degrees in a current camera parameter to update the pitch information to 5 degrees.

For example, the camera parameters may include an intrinsic parameter associated with an intrinsic characteristic of a camera (e.g., the camera 115), such as, for example, a focal length, an aspect ratio, and a principal point of the camera, and an extrinsic parameter associated with a geometric relationship between the camera and an external space, such as for example, an installation height and a direction (e.g., pan, tilt).

By updating the camera parameters using either one or both of the roll information and the pitch information of the vehicle, an image more naturally rendered to a movement of the vehicle may be generated using the updated camera parameters.

In operation 460, the electronic device visualizes a blind spot of the camera based on either one or both of the roll information and the pitch information using the updated parameters and the second transformation matrix.

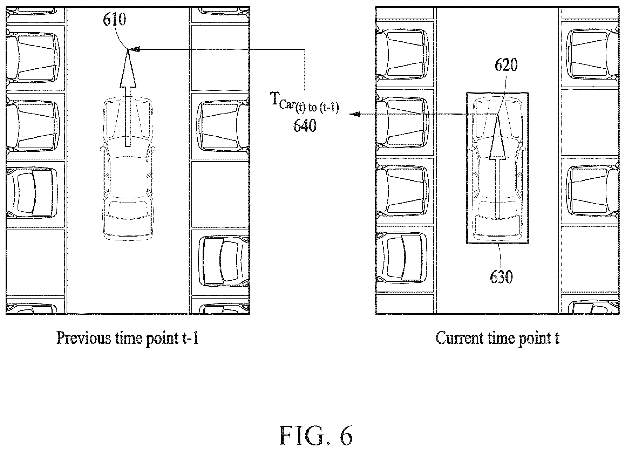

In the example of FIG. 6, the electronic device may use a second transformation matrix 640 to determine a region 610 of a previous time point t-1 that corresponds to a region 620 of a current time point t corresponding to a blind spot 630. For example, the region 620 within the blind spot 630 at the current time point t may correspond to a portion that may not be directly captured by a camera at the current time point t. To visualize the region 620, an image captured at the previous time point t-1 may be used. Using the second transformation matrix 640, it may be identified that the region 620 corresponds to the region 610 of the previous time point t-1.

The electronic device of one or more embodiments may visualize the region 610 of the previous time point t-1 in the blind spot 630 based on updated parameters. As described above, the updated parameters may be camera-related parameters to which a movement of a vehicle between the previous time point t-1 and the current time point t is applied, the electronic device of one or more embodiments may visualize the region 610 of the previous time point t-1 on the blind spot 630 based on the updated parameters, and the blind spot 630 may thereby be naturally visualized for the movement of the vehicle. For example, when pitch information is changed between the previous time point t-1 and the current time point t as the vehicle crosses a speed bump, the electronic device of one or more embodiments may visualize the region 610 of the previous time point t-1 in the region 620 of the current time point t based on the changed pitch information.

In addition, the electronic device determines a third transformation matrix of a vehicle coordinate system based on traveling information of the vehicle. For example, the electronic device may rapidly acquire the third transformation matrix of the vehicle coordinate system from a CAN signal. In addition, since the third transformation matrix of the vehicle coordinate system determined from the CAN signal may have higher accuracy than a second transformation matrix of the vehicle coordinate system determined based on an image, when the vehicle is traveling on a straight road on a flat ground, the electronic device acquires a transformation matrix of the vehicle coordinate system with higher accuracy by correcting the second transformation matrix using the third transformation matrix.

The electronic device of one or more embodiments may correct the first transformation matrix including the rotation matrix and the translation matrix determined in operation 430, using a value of a sensor fixed to the vehicle. For example, the sensor fixed to the vehicle may include a light detection and ranging (lidar) sensor and a radio detection and ranging (radar) sensor to detect a 3D movement of the vehicle. When the sensor is provided in the vehicle, a transformation matrix of the camera coordinate system with higher accuracy may be acquired by correcting the first transformation matrix additionally using the value of the sensor.

In addition, when the vehicle starts traveling again after being parked, the electronic device of one or more embodiments may visualize a blind spot that is before the parked vehicle starts traveling again, as a blind spot image determined in a state where the vehicle was traveling before being parked. The visualizing of the blind spot of the vehicle that is traveling has been described above, and a region corresponding to a blind spot at a current time point may not be a region that did not belong to the blind spot at a previous time point and may correspond to a region captured by the camera. When the vehicle previously parked starts traveling again, the vehicle may be in a state that is not moving, and thus the region corresponding to the blind spot at the current time point may still correspond to the blind spot at the previous time point. In this case, by storing, in a memory, a blind spot image determined as described above while the vehicle is traveling to a parking position at which the vehicle is to be parked, the electronic device of one or more embodiments may continuously visualize a blind spot by visualizing a blind spot which is one before the vehicle starts traveling again, as the blind spot image stored in the memory.

In addition, the camera coordinate system and the camera parameters determined in operations 410 through 460 may be based on any one determined from among a plurality of cameras fixed to the vehicle based on a traveling direction of the vehicle. For example, when the vehicle travels forward, the camera coordinate system and the camera parameters may be based on a camera that captures an image of the front side of the vehicle. When the vehicle travels backward, the camera coordinate system and the camera parameters may be based on a camera that captures an image of the rear side of the vehicle.

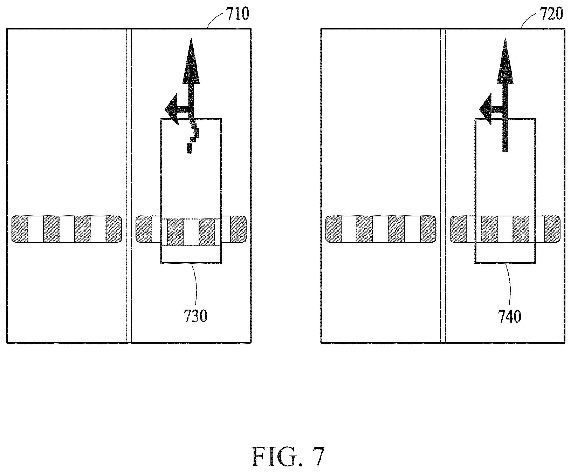

FIG. 7 illustrates an example of visualization of a blind spot to which a movement of a vehicle is applied.

Referring to FIG. 7, illustrated are an example 710 of a typical electronic device visualizing a blind spot without applying roll information and pitch information and an example 720 of the electronic device of one or more embodiments visualizing a blind spot by applying roll information and/or pitch information.

When a vehicle crosses a speed bump, a change in pitch information may occur. However, by simply using an image of a previous time point for visualization without applying such a change in the pitch information, the typical electronic device degrades the consistency of a blind spot 730. As illustrated in the example 710 of FIG. 7, the inside and the outside with respect to a boundary line of the blind spot 730 may not match each other.

In contrast, by applying roll information and/or pitch information to visualize a blind spot 740, the electronic device of one or more embodiments may maintain the high consistency of the blind spot 740 as illustrated in the example 720 of FIG. 7. In this example, the visualization may be performed such that the inside and the outside with respect to a boundary line of the blind spot 740 may match naturally. As described above, by visualizing a blind spot naturally even in various driving situations, the electronic device of one or more embodiments may effectively improve the user's driving convenience and safety.

The electronic devices, vehicles, memories, processors, cameras, vehicle 100, electronic device 110, memory 111, processor 113, camera 115, vehicle 310, and other devices, apparatuses, units, modules, and components described herein with respect to FIGS. 1-7 are implemented by or representative of hardware components. Examples of hardware components that may be used to perform the operations described in this application where appropriate include controllers, sensors, generators, drivers, memories, comparators, arithmetic logic units, adders, subtractors, multipliers, dividers, integrators, and any other electronic components configured to perform the operations described in this application. In other examples, one or more of the hardware components that perform the operations described in this application are implemented by computing hardware, for example, by one or more processors or computers. A processor or computer may be implemented by one or more processing elements, such as an array of logic gates, a controller and an arithmetic logic unit, a digital signal processor, a microcomputer, a programmable logic controller, a field-programmable gate array, a programmable logic array, a microprocessor, or any other device or combination of devices that is configured to respond to and execute instructions in a defined manner to achieve a desired result. In one example, a processor or computer includes, or is connected to, one or more memories storing instructions or software that are executed by the processor or computer. Hardware components implemented by a processor or computer may execute instructions or software, such as an operating system (OS) and one or more software applications that run on the OS, to perform the operations described in this application. The hardware components may also access, manipulate, process, create, and store data in response to execution of the instructions or software. For simplicity, the singular term "processor" or "computer" may be used in the description of the examples described in this application, but in other examples multiple processors or computers may be used, or a processor or computer may include multiple processing elements, or multiple types of processing elements, or both. For example, a single hardware component or two or more hardware components may be implemented by a single processor, or two or more processors, or a processor and a controller. One or more hardware components may be implemented by one or more processors, or a processor and a controller, and one or more other hardware components may be implemented by one or more other processors, or another processor and another controller. One or more processors, or a processor and a controller, may implement a single hardware component, or two or more hardware components. A hardware component may have any one or more of different processing configurations, examples of which include a single processor, independent processors, parallel processors, single-instruction single-data (SISD) multiprocessing, single-instruction multiple-data (SIMD) multiprocessing, multiple-instruction single-data (MISD) multiprocessing, and multiple-instruction multiple-data (MIMD) multiprocessing.

The methods illustrated in FIGS. 1-7 that perform the operations described in this application are performed by computing hardware, for example, by one or more processors or computers, implemented as described above executing instructions or software to perform the operations described in this application that are performed by the methods. For example, a single operation or two or more operations may be performed by a single processor, or two or more processors, or a processor and a controller. One or more operations may be performed by one or more processors, or a processor and a controller, and one or more other operations may be performed by one or more other processors, or another processor and another controller. One or more processors, or a processor and a controller, may perform a single operation, or two or more operations.

Instructions or software to control computing hardware, for example, one or more processors or computers, to implement the hardware components and perform the methods as described above may be written as computer programs, code segments, instructions or any combination thereof, for individually or collectively instructing or configuring the one or more processors or computers to operate as a machine or special-purpose computer to perform the operations that are performed by the hardware components and the methods as described above. In one example, the instructions or software include machine code that is directly executed by the one or more processors or computers, such as machine code produced by a compiler. In another example, the instructions or software includes higher-level code that is executed by the one or more processors or computer using an interpreter. The instructions or software may be written using any programming language based on the block diagrams and the flow charts illustrated in the drawings and the corresponding descriptions in the specification, which disclose algorithms for performing the operations that are performed by the hardware components and the methods as described above.

The instructions or software to control computing hardware, for example, one or more processors or computers, to implement the hardware components and perform the methods as described above, and any associated data, data files, and data structures, may be recorded, stored, or fixed in or on one or more non-transitory computer-readable storage media. Examples of a non-transitory computer-readable storage medium include read-only memory (ROM), random-access programmable read only memory (PROM), electrically erasable programmable read-only memory (EEPROM), random-access memory (RAM), dynamic random access memory (DRAM), static random access memory (SRAM), flash memory, non-volatile memory, CD-ROMs, CD-Rs, CD+Rs, CD-RWs, CD+RWs, DVD-ROMs, DVD-Rs, DVD+Rs, DVD-RWs, DVD+RWs, DVD-RAMs, BD-ROMs, BD-Rs, BD-R LTHs, BD-REs, blue-ray or optical disk storage, hard disk drive (HDD), solid state drive (SSD), flash memory, a card type memory such as multimedia card micro or a card (for example, secure digital (SD) or extreme digital (XD)), magnetic tapes, floppy disks, magneto-optical data storage devices, optical data storage devices, hard disks, solid-state disks, and any other device that is configured to store the instructions or software and any associated data, data files, and data structures in a non-transitory manner and provide the instructions or software and any associated data, data files, and data structures to one or more processors or computers so that the one or more processors or computers can execute the instructions. In one example, the instructions or software and any associated data, data files, and data structures are distributed over network-coupled computer systems so that the instructions and software and any associated data, data files, and data structures are stored, accessed, and executed in a distributed fashion by the one or more processors or computers.

While this disclosure includes specific examples, it will be apparent after an understanding of the disclosure of this application that various changes in form and details may be made in these examples. The examples described herein are to be considered in a descriptive sense only, and not for purposes of limitation. Descriptions of features or aspects in each example are to be considered as being applicable to similar features or aspects in other examples.

Therefore, the scope of the disclosure is defined not by the detailed description, but by the claims.

**Claims**

1.  An electronic device (110), comprising:

    a processor (113) configured to:

based on two images captured at two different time points by a camera (115) of a vehicle that is traveling and traveling information of the vehicle, determine a first transformation matrix of a camera coordinate system comprising a rotation matrix and a translation matrix for a movement of the vehicle between the two time points, wherein the translation matrix is scaled by a moving distance based on the traveling information; transform the first transformation matrix into a second transformation matrix of a vehicle coordinate system for a movement of the vehicle between the two time points; wherein, for the transforming into the second transformation matrix, the processor (113) is configured to (i) determine the second transformation matrix based on a transformation matrix that transforms the vehicle coordinate system into the camera coordinate system, the first transformation matrix, and a transformation matrix that transforms the camera coordinate system into the vehicle coordinate system, and (ii) correct the second transformation matrix of the vehicle coordinate system based on a third transformation matrix of the vehicle coordinate system that is determined from the traveling information of the vehicle; update an extrinsic parameter of the camera to apply the movement of the vehicle to the extrinsic parameter of the camera, based on either one or both of roll information and pitch information of the vehicle acquired from the rotation matrix; and visualize a blind spot (230, 240) of the camera based on the either one or both of the roll information and the pitch information, and based on the updated extrinsic parameter and the second transformation matrix, and wherein the two time points comprise a previous time point and a current time point, and for the visualizing of the blind spot, the processor (113) is configured to:

determine a region at the previous time point that corresponds to a region at the current time point corresponding to the blind spot, based on the second transformation matrix; and visualize the region at the previous time point on the blind spot (230, 240) based on the updated extrinsic parameter.

2. The electronic device (110) of claim 1, wherein, for the updating of the extrinsic parameter, the processor (113) is configured to update the extrinsic parameter by applying, to the extrinsic parameter, either one or both of the roll information and the pitch information changed by the movement of the vehicle.

3. The electronic device (110) of claim 1 or 2, wherein

for the determining of the first transformation matrix, the processor (113) is configured to:

determine an essential matrix based on a matching relationship between features extracted from the two images and the extrinsic parameter; and determine the rotation matrix and the translation matrix by decomposing the essential matrix, and

the translation matrix is scaled by a moving distance that is based on the traveling information; and/or wherein, for the determining of the first transformation matrix, the processor (113) is configured to correct the first transformation matrix comprising the rotation matrix and the translation matrix, based on a value of a sensor of the vehicle.

4. The electronic device (110) of any one of the previous claims, wherein, for the visualizing of the blind spot, the processor (113) is configured to, before the vehicle starts traveling again after being parked, visualize the blind spot (230, 240) as a blind spot image determined while the vehicle is traveling before being parked.

5. The electronic device (110) of any one of the previous claims, wherein the camera coordinate system and the extrinsic parameter are based on any one of a plurality of cameras (115) of the vehicle that is determined based on a traveling direction of the vehicle.

6. The electronic device (110) of any one of the previous claims, wherein the blind spot (230, 240) comprises a region under the vehicle that is not captured by a plurality of cameras (115) of the vehicle.

7. A processor-implemented method of an electronic device (110), comprising:

acquiring two images captured at two different time points by a camera (115) of a vehicle that is traveling; acquiring traveling information of the vehicle;

determining a first transformation matrix of a camera coordinate system comprising a rotation matrix and a translation matrix between the two time points, based on the two images and the traveling information, wherein the translation matrix is scaled by a moving distance based on the traveling information;

transforming the first transformation matrix into a second transformation matrix of a vehicle coordinate system for a movement of the vehicle between the two time points; wherein the transforming into the second transformation matrix comprises (i) determining the second transformation matrix based on a transformation matrix that transforms the vehicle coordinate system into the camera coordinate system, the first transformation matrix, and a transformation matrix that transforms the camera coordinate system into the vehicle coordinate system, and (ii) correcting the second transformation matrix of the vehicle coordinate system based on a third transformation matrix of the vehicle coordinate system that is determined from the traveling information of the vehicle;

updating an extrinsic parameter of the camera to apply a movement of the vehicle to the extrinsic parameter of the camera, based on either one or both of roll information and pitch information of the vehicle acquired from the rotation matrix; and

visualizing a blind spot (230, 240) of the camera based on either one or both of the roll information and the pitch information, and based on the updated extrinsic parameter and the second transformation matrix, and

wherein the two time points comprise a previous time point and a current time point, and

the visualizing the blind spot (230, 240) comprises:

determining a region at the previous time point that corresponds to a region at the current time point corresponding to the blind spot (230, 240), based on the second transformation matrix; and

visualizing the region at the previous time point on the blind spot (230, 240) based on the updated extrinsic parameter.

8. The method of claim 7, wherein the updating the extrinsic parameter comprises updating the extrinsic parameter by applying, to the extrinsic parameter, either one or both of the roll information and the pitch information changed by the movement of the vehicle.

9. The method of claim 7 or 8, wherein

the determining the first transformation matrix comprises:

determining an essential matrix based on a matching relationship between features extracted from the two images and the extrinsic parameter; and

determining the rotation matrix and the translation matrix by decomposing the essential matrix, and

the translation matrix is scaled by a moving distance that is based on the traveling information;

and/or

wherein the determining the first transformation matrix comprises correcting the first transformation matrix comprising the rotation matrix and the translation matrix, based on a value of a sensor of the vehicle.

10. The method of any one of claims 7 to 9, wherein the visualizing the blind spot (230, 240) comprises, before the vehicle starts traveling again after being parked, visualizing the blind spot (230, 240) as a blind spot image determined while the vehicle is traveling before being parked; and/or

the camera coordinate system and the extrinsic parameter are based on any one of a plurality of cameras (115) of the vehicle that is determined based on a traveling direction of the vehicle.

11. A non-transitory computer-readable storage medium storing instructions that, when executed by a processor, configure the processor to perform the method of any one of claims 7 to 10.

**Patentansprüche**

1. Elektronische Vorrichtung (110), die Folgendes umfasst:
einen Prozessor (113), der zu Folgendem konfiguriert ist:

basierend auf zwei Bildern, die zu zwei verschiedenen Zeitpunkten von einer Kamera (115) eines fahrenden Fahrzeugs aufgenommen wurden, und auf Fahrinformationen des Fahrzeugs, Bestimmen einer ersten Transformationsmatrix eines Kamerakoordinatensystems umfassend eine Rotationsmatrix und eine Translationsmatrix für eine Bewegung des Fahrzeugs zwischen den zwei Zeitpunkten, wobei die Translationsmatrix um einen auf den Fahrinformationen basierenden Abstand skaliert wird;

Transformieren der ersten Transformationsmatrix in eine zweite Transformationsmatrix eines Fahrzeugkoordinatensystems für eine Bewegung des Fahrzeugs zwischen den zwei Zeitpunkten;

wobei für das Transformieren in die zweite Transformationsmatrix der Prozessor (113) konfiguriert ist zum (i) Bestimmen der zweiten Transformationsmatrix basierend auf einer Transformationsmatrix, die das Fahrzeugkoordinatensystem in das Kamerakoordinatensystem transformiert, der ersten Transformationsmatrix und einer Transformationsmatrix, die das Kamerakoordinatensystem in das Fahrzeugkoordinatensystem transformiert, und zum (ii) Korrigieren der zweiten Transformationsmatrix des Fahrzeugkoordinatensystems basierend auf einer dritten Transformationsmatrix des Fahrzeugkoordinatensystems, die aus den Fahrinformationen des Fahrzeugs bestimmt wird;

Aktualisieren eines extrinsischen Parameters der Kamera, um die Bewegung des Fahrzeugs auf den extrinsischen Parameter der Kamera anzuwenden, basierend auf entweder einer oder beiden von Rollinformationen und Neigungsinformationen des Fahrzeugs, die von der Rotationsmatrix erhalten werden; und

Visualisieren eines toten Winkels (230, 240) der Kamera basierend auf entweder einer oder beiden der Rollinformationen und der Neigungsinformationen, und basierend auf dem aktualisierten extrinsischen Parameter und der zweiten Transformationsmatrix, und

wobei die zwei Zeitpunkte einen vorhergehenden Zeitpunkt und einen aktuellen Zeitpunkt umfassen, und für die Visualisierung des toten Winkels der Prozessor (113) konfiguriert ist zum:

Bestimmen eines Bereichs zu dem vorhergehenden Zeitpunkt, der einem Bereich zu dem aktuellen Zeitpunkt entspricht, der dem toten Winkel entspricht, basierend auf der zweiten Transformationsmatrix, und Visualisieren des Bereichs zu dem vorhergehenden Zeitpunkt auf dem toten Winkel (230, 240) basierend auf dem aktualisierten extrinsischen Parameter.

2. Elektronische Vorrichtung (110) nach Anspruch 1, wobei zum Aktualisieren des extrinsischen Parameters der Prozessor (113) konfiguriert ist, um den extrinsischen Parameter zu aktualisieren, indem er auf den extrinsischen Parameter entweder eine oder beide der Rollinformationen und der Neigungsinformationen anwendet, die durch die Bewegung des Fahrzeugs geändert werden.

3. Elektronische Vorrichtung (110) nach Anspruch 1 oder 2, wobei

zum Bestimmen der ersten Transformationsmatrix der Prozessor (113) konfiguriert ist zum:

Bestimmen einer essentiellen Matrix basierend auf einer Abgleichsbeziehung zwischen aus den beiden Bildern extrahierten Merkmalen und dem extrinsischen Parameter; und Bestimmen der Rotationsmatrix und der Translationsmatrix durch Zerlegen der essentiellen Matrix, und

wobei die Translationsmatrix um einen auf den Fahrinformationen basierenden Bewegungsabstand skaliert wird; und/oder

wobei für das Bestimmen der ersten Transformationsmatrix der Prozessor (113) konfiguriert ist, um die erste Transformationsmatrix, die die Rotationsmatrix und die Translationsmatrix umfasst, basierend auf einem Wert eines Sensors des Fahrzeugs zu korrigieren.

4. Elektronische Vorrichtung (110) nach einem der vorhergehenden Ansprüche, wobei zum Visualisieren des toten Winkels der Prozessor (113) konfiguriert ist, um, bevor das Fahrzeug nach dem Parken wieder zu fahren beginnt, den toten Winkel (230, 240) als ein Bild des toten Winkels zu visualisieren, das während der Fahrt vor dem Parken des Fahrzeugs bestimmt wurde.

5. Elektronische Vorrichtung (110) nach einem der vorhergehenden Ansprüche, wobei das Kamerakoordinatensystem und der extrinsische Parameter auf einer beliebigen einer Vielzahl von Kameras (115) des Fahrzeugs basieren, die basierend auf einer Fahrtrichtung des Fahrzeugs bestimmt wird.

6. Elektronische Vorrichtung (110) nach einem der vorhergehenden Ansprüche, wobei der tote Winkel (230, 240) einen Bereich unter dem Fahrzeug umfasst, der nicht von einer Vielzahl von Kameras (115) des Fahrzeugs aufgenommen wird.

7. Prozessorimplementiertes Verfahren für eine elektronische Vorrichtung (110), das Folgendes umfasst:

Erhalten von zwei Bildern, die zu zwei verschiedenen Zeitpunkten von einer Kamera (115) eines fahrenden Fahrzeugs aufgenommen wurden;

Erhalten von Fahrinformationen des Fahrzeugs;

Bestimmen einer ersten Transformationsmatrix eines Kamerakoordinatensystems umfassend eine Rotationsmatrix und eine Translationsmatrix zwischen den beiden Zeitpunkten, basierend auf den beiden Bildern und den Fahrinformationen, wobei die Translationsmatrix durch einen auf den Fahrinformationen basierenden Bewegungsabstand skaliert wird;

Transformieren der ersten Transformationsmatrix in eine zweite Transformationsmatrix eines Fahrzeugkoordinatensystems für eine Bewegung des Fahrzeugs zwischen den zwei Zeitpunkten; wobei das Transformieren in die zweite Transformationsmatrix Folgendes umfasst: (i) Bestimmen der zweiten Transformationsmatrix basierend auf einer Transformationsmatrix, die das Fahrzeugkoordinatensystem in das Kamerakoordinatensystem transformiert, der ersten Transformationsmatrix und einer Transformationsmatrix, die das Kamerakoordinatensystem in das Fahrzeugkoordinatensystem transformiert, und (ii) Korrigieren der zweiten Transformationsmatrix des Fahrzeugkoordinatensystems basierend auf einer dritten Transformationsmatrix des Fahrzeugkoordinatensystems, die aus den Fahrinformationen des Fahrzeugs bestimmt wird;

Aktualisieren eines extrinsischen Parameters der Kamera, um eine Bewegung des Fahrzeugs auf den extrinsischen Parameter der Kamera anzuwenden, basierend auf entweder einer oder beiden von Rollinformationen und Neigungsinformationen des Fahrzeugs, die von der Rotationsmatrix erhalten werden; und

Visualisieren eines toten Winkels (230, 240) der Kamera basierend auf entweder einer oder beiden der Rollinformationen und der Neigungsinformationen, und basierend auf dem aktualisierten extrinsischen Parameter und der zweiten Transformationsmatrix, und

wobei die zwei Zeitpunkte einen vorhergehenden Zeitpunkt und einen aktuellen Zeitpunkt umfassen, und die Visualisierung des toten Winkels (230, 230) Folgendes umfasst:

Bestimmen eines Bereichs zu dem vorhergehenden Zeitpunkt, der einem Bereich zu dem aktuellen Zeitpunkt entspricht, der dem toten Winkel (230, 240) entspricht, basierend auf der zweiten Transformationsmatrix; und

Visualisieren des Bereichs zu dem vorhergehenden Zeitpunkt auf dem toten Winkel (230, 240) basierend auf dem aktualisierten extrinsischen Parameter.

8. Verfahren nach Anspruch 7, wobei das Aktualisieren des extrinsischen Parameters das Aktualisieren des extrinsischen Parameters, indem auf den extrinsischen Parameter entweder eine oder beide der Rollinformationen und der Neigungsinformationen angewendet werden, die durch die Bewegung des Fahrzeugs geändert wurden, umfasst.

9. Verfahren nach Anspruch 7 oder 8, wobei

das Bestimmen des ersten Transformationsparameters Folgendes umfasst:

Bestimmen einer essentiellen Matrix basierend auf einer Abgleichsbeziehung zwischen aus den beiden Bildern extrahierten Merkmalen und dem extrinsischen Parameter; und

Bestimmen der Rotationsmatrix und der Translationsmatrix durch Zerlegen der essentiellen Matrix, und

wobei die Translationsmatrix um einen auf den Fahrinformationen basierenden Bewegungsabstand skaliert wird;

und/oder

wobei das Bestimmen der ersten Transformationsmatrix das Korrigieren der ersten Transformationsmatrix umfasst, die die Rotationsmatrix und die Translationsmatrix umfasst, basierend auf einem Wert eines Sensors des Fahrzeugs.

10. Verfahren nach einem der Ansprüche 7 bis 9, wobei das Visualisieren des toten Winkels (230, 230) Folgendes umfasst, bevor das Fahrzeug nach dem Parken wieder zu fahren beginnt:

Visualisieren des toten Winkels (230, 240) als ein Bild des toten Winkels, das während der Fahrt vor dem Parken des Fahrzeugs bestimmt wurde; und/oder

wobei das Kamerakoordinatensystem und der extrinsische Parameter auf einer beliebigen einer Vielzahl von Kameras (115) des Fahrzeugs basieren, die nach einer Fahrtrichtung des Fahrzeugs bestimmt wird.

**11.** Übergangsloses, computerlesbares Speichermedium, in dem Anweisungen gespeichert sind, die, wenn sie von einem Prozessor ausgeführt werden, bewirken, dass der Prozessor das Verfahren nach einem der Ansprüche 7 bis 10 durchführt.

**Revendications**

**1.** Dispositif électronique (110), comprenant :
un processeur (113) configuré pour :

à partir de deux images prises à deux instants différents par une caméra (115) d'un véhicule en mouvement et à partir d'informations de déplacement du véhicule, déterminer une première matrice de transformation d'un système de coordonnées de caméra comprenant une matrice de rotation et une matrice de translation relativement à un déplacement du véhicule entre les deux instants, ladite matrice de translation étant mise à l'échelle compte tenu de la distance de déplacement en fonction des informations de déplacement ;
transformer la première matrice de transformation en une deuxième matrice de transformation d'un système de coordonnées de véhicule relativement à un déplacement du véhicule entre les deux instants ;
étant entendu que, pour la transformation en ladite deuxième matrice de transformation, le processeur (113) est configuré pour (i) déterminer la deuxième matrice de transformation compte tenu d'une matrice de transformation qui transforme le système de coordonnées de véhicule en système de coordonnées de caméra, de la première matrice de transformation et d'une matrice de transformation qui transforme le système de coordonnées de caméra en système de coordonnées de véhicule, et (ii) corriger la deuxième matrice de transformation du système de coordonnées de véhicule compte tenu d'une troisième matrice de transformation du système de coordonnées de véhicule qui est déterminée à partir des informations de déplacement du véhicule ;
actualiser un paramètre extrinsèque de la caméra pour appliquer le déplacement du véhicule au paramètre extrinsèque de la caméra, compte tenu d'informations de roulis et/ou d'informations de tangage du véhicule acquises à partir de la matrice de rotation ; et
visualiser un angle mort (230, 240) de la caméra compte tenu des informations de roulis et/ou des informations de tangage, et compte tenu du paramètre extrinsèque actualisé et de la deuxième matrice de transformation ;
lesdits deux instants comprenant un instant antérieur et un instant actuel, et
pour la visualisation de l'angle mort, le processeur (113) étant configuré pour :

déterminer, compte tenu de la deuxième matrice de transformation, une région qui correspondait, à l'instant antérieur, à une région qui correspond à l'angle mort à l'instant actuel, et
visualiser la région de l'instant antérieur sur l'angle mort (230, 240) compte tenu du paramètre extrinsèque actualisé.

**2.** Dispositif électronique (110) selon la revendication 1, dans lequel, pour l'actualisation du paramètre extrinsèque, le processeur (113) est configuré pour actualiser le paramètre extrinsèque en appliquant au paramètre extrinsèque les informations de roulis et/ou les informations de tangage modifiées compte tenu du déplacement du véhicule.

**3.** Dispositif électronique (110) selon la revendication 1 ou 2, dans lequel

pour la détermination de la première matrice de transformation, le processeur (113) est configuré pour :

déterminer une matrice essentielle compte tenu d'une relation de correspondance entre des caractéristiques extraites des deux images et du paramètre extrinsèque, et
déterminer la matrice de rotation et la matrice de translation en décomposant la matrice essentielle, et

la matrice de translation est mise à l'échelle compte tenu de la distance de déplacement en fonction des informations de déplacement ;
et/ou
pour la détermination de la première matrice de transformation, le processeur (113) est configuré pour corriger la première matrice de transformation comprenant la matrice de rotation et la matrice de translation, compte tenu d'une valeur d'un capteur du véhicule.

**4.** Dispositif électronique (110) selon l'une quelconque des revendications précédentes, dans lequel, pour la visualisation de l'angle mort, le processeur (113) est configuré pour, avant que le véhicule ne redémarre après avoir stationné, visualiser l'angle mort (230, 240) sous la forme d'une image d'angle mort déterminée pendant que le véhicule était en mouvement avant de stationner.

5. Dispositif électronique (110) selon l'une quelconque des revendications précédentes, dans lequel le système de coordonnées de caméra et le paramètre extrinsèque reposent sur une caméra d'une pluralité de caméras (115) du véhicule qui est déterminée en fonction du sens de déplacement du véhicule.

6. Dispositif électronique (110) selon l'une quelconque des revendications précédentes, dans lequel l'angle mort (230, 240) comprend une région située sous le véhicule, qui n'est pas capturée par une pluralité de caméras (115) du véhicule.

7. Procédé mis en œuvre par processeur, propre à un dispositif électronique (110), comprenant :

l'acquisition de deux images prises à deux instants différents par une caméra (115) d'un véhicule en mouvement, l'acquisition d'informations de déplacement du véhicule, la détermination d'une première matrice de transformation d'un système de coordonnées de caméra comprenant une matrice de rotation et une matrice de translation entre les deux instants, compte tenu des deux images et des informations de déplacement, ladite matrice de translation étant mise à l'échelle compte tenu de la distance de déplacement en fonction des informations de déplacement ;
la transformation de la première matrice de transformation en une deuxième matrice de transformation d'un système de coordonnées de véhicule relativement à un déplacement du véhicule entre les deux instants, ladite transformation en ladite deuxième matrice de transformation comprenant (i) la détermination de la deuxième matrice de transformation compte tenu d'une matrice de transformation qui transforme le système de coordonnées de véhicule en système de coordonnées de caméra, de la première matrice de transformation et d'une matrice de transformation qui transforme le système de coordonnées de caméra en système de coordonnées de véhicule, et (ii) la correction de la deuxième matrice de transformation du système de coordonnées de véhicule compte tenu d'une troisième matrice de transformation du système de coordonnées de véhicule qui est déterminée à partir des informations de déplacement du véhicule ;
l'actualisation d'un paramètre extrinsèque de la caméra pour appliquer un déplacement du véhicule au paramètre extrinsèque de la caméra, compte tenu d'informations de roulis et/ou d'informations de tangage du véhicule acquises à partir de la matrice de rotation ; et
la visualisation d'un angle mort (230, 240) de la caméra compte tenu des informations de roulis et/ou des informations de tangage, et compte tenu du paramètre extrinsèque actualisé et de la deuxième matrice de transformation ;
lesdits deux instants comprenant un instant antérieur et un instant actuel, et
la visualisation de l'angle mort (230, 240) comprenant :

la détermination, compte tenu de la deuxième matrice de transformation, d'une région qui correspondait, à l'instant antérieur, à une région qui correspond à l'angle mort (230, 240) à l'instant actuel, et
la visualisation de la région de l'instant antérieur sur l'angle mort (230, 240) compte tenu du paramètre extrinsèque actualisé.

8. Procédé selon la revendication 7, dans lequel l'actualisation du paramètre extrinsèque comprend l'actualisation dudit paramètre extrinsèque par application, audit paramètre extrinsèque, des informations de roulis et/ou des informations de tangage modifiées compte tenu du déplacement du véhicule.

9. Procédé selon la revendication 7 ou 8, dans lequel

la détermination de la première matrice de transformation comprend :

la détermination d'une matrice essentielle compte tenu d'une relation de correspondance entre des caractéristiques extraites des deux images et du paramètre extrinsèque, et
la détermination de la matrice de rotation et de la matrice de translation par décomposition de la matrice essentielle, et

la matrice de translation est mise à l'échelle compte tenu de la distance de déplacement en fonction des informations de déplacement ;
et/ou

dans lequel la détermination de la première matrice de transformation comprend la correction de la première matrice de transformation comprenant la matrice de rotation et la matrice de translation, compte tenu d'une valeur d'un capteur du véhicule.

10. Procédé selon l'une quelconque des revendications 7 à 9, dans lequel la visualisation de l'angle mort (230, 240) comprend, avant que le véhicule ne redémarre après avoir stationné, la visualisation de l'angle mort (230, 240) sous la forme d'une image de l'angle mort déterminée pendant que véhicule était en mouvement avant de stationner, et/ou le système de coordonnées de caméra et le paramètre extrinsèque reposent sur une caméra d'une pluralité de caméras (115) du véhicule qui est déterminée en fonction du sens de déplacement du véhicule.

11. Support de stockage non transitoire lisible par ordinateur sur lequel sont stockées des instructions qui, lorsqu'elles sont exécutées par un processeur, configurent le processeur de façon qu'il exécute le procédé selon l'une quelconque des revendications 7 à 10.

FIG. 1

Input images

SVM image

FIG. 2

FIG. 3

Start

410

Acquire two images captured at two time points

420

Acquire traveling information of vehicle

430

Determine first transformation matrix of camera coordinate system including rotation matrix and translation matrix between two time points, using two images and traveling information of vehicle

440

Transform first transformation matrix into second transformation matrix of vehicle coordinate system

450

Update camera parameters using at least one of roll information or pitch information of vehicle acquired from rotation matrix

460

Visualize blind spot of camera based on at least one of roll information or pitch information, using updated parameters and second transformation matrix

End

FIG. 4

FIG. 5

610

$T_{Car(t) \, to \, (t-1)}$
640

620

630

Previous time point t-1

Current time point t

FIG. 6

FIG. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2571923 A

**Non-patent literature cited in the description**

- **GANKE PAUL et al.** Tightly-Coupled GNSS/Vision Using a Sky-Pointing Camera for Vehicle Navigation in Urban Areas. *Sensors*, 2018, vol. 18 (4), 1244